# EUROPEAN PATENT APPLICATION

(11) **EP 4 328 834 A1**
(43) Date of publication of application: **28.02.2024**
(21) Application number: 23186726.8
(22) Date of filing: 20.07.2023
(51) Int. Cl.: G06Q 20/20, G06Q 20/32, G07G 1/00

(54) **REGISTRATION DEVICE, CHECKOUT DEVICE, AND METHOD**

(30) Priority: 23.08.2022 JP 2022132723
(71) Applicant: Toshiba TEC Kabushiki Kaisha, Tokyo 141-8562 (JP)
(72) Inventor: Aoki, Ken, Tokyo, 141-8562 (JP)
(74) Representative: Bandpay & Greuter

(57) **Abstract**

A product registration device includes a display screen, a network interface, a storage memory unit for storing a customer identification, a product reader configured to read commodity identification information from a product to be purchased in a sales transaction, and a processor. The processor is configured to register commodity identification information read by the product reader in association with a transaction identification on an external server device connected via the network interface, then acquire the transaction identification for the sales transaction from the external server device, generate a code symbol encoding the acquired transaction identification and the customer identification from the storage memory unit, and cause the display screen to display the generated code symbol.

## Description

### FIELD

Embodiments of the present disclosure relate to a registration device, a checkout device, and a method for a point-of-sale system.

### BACKGROUND

In the related art, there is a POS (Point Of Sales) system in which a customer himself/herself can register a commodity in a sales transaction by using a mobile terminal such as a smartphone as a registration device while the customer shops in a store. In addition, in such a system, it is possible to perform checkout of registered commodities using a checkout device (e.g., a payment kiosk) placed in the store.

For example, in the related art, there is a system in which commodity codes for commodities being purchased, customer identification information, and the like as read or otherwise provided by a mobile terminal are transmitted from the mobile terminal to an external device such as a server device which manages (tracks) the information for the sales transaction. In addition, a technique has been proposed in which information necessary for obtaining the transaction information from the external device is encoded and displayed on the mobile terminal (e.g., as a barcode or the like), and the checkout device can be caused to read the encoded information, whereby the full transaction information necessary for checkout at the checkout device can be acquired from the external device.

In some cases, a store may establish a customer loyalty program, referred to in this context as a point service, which awards points according to the purchase prices of commodities bought by the customer. In such a case, customer identification information, such as a member number associated with the point service, must be input to the checkout device in order to identify the customer to whom points are to be given in association with the sales transaction. In the related art, the customer identification information is distributed to each customer (member) in advance as a member card or the like, and the customer can use the point service by causing the checkout device to read the member card.

However, the operation of causing the member card to be read is somewhat complicated and/or burdensome for the customer to perform, and, in some case, the customer may forget the member card, and thus there is room for improvement in terms of convenience to customers in point-of-sale systems of this type. In addition, in the system in the related art, since the commodity code and the customer identification information are centrally managed on the external device, there is generally a lower degree of freedom for the customers who operate mobile terminals, and there is room for further improvement in terms of convenience for mobile terminal user.

To this end, there is provided a product registration device, a checkout device and a non-transitory computer-readable medium storing program instructions according to the appended claims.

### BRIEF DESCRIPTION OF THE DRAWINGS

FIG. 1 is a diagram schematically showing an example of a configuration of a POS system according to an embodiment.
FIG. 2 is a diagram showing an example of a hardware configuration of a mobile terminal according to an embodiment.
FIG. 3 is a diagram of a transaction management server according to an embodiment.
FIG. 4 is a diagram of a data configuration of a commodity master according to an embodiment.
FIG. 5 is a diagram of a data configuration of a transaction management file according to an embodiment.
FIG. 6 is a diagram of a checkout device according to an embodiment.
FIG. 7 is a diagram of a member management server according to an embodiment.
FIG. 8 is a diagram of a data configuration of a member management file according to an embodiment.
FIG. 9 is a diagram depicting certain functional aspects of a mobile terminal, a transaction management server, a checkout device, and a member management server according to an embodiment.
FIG. 10 is a sequence diagram of an operation related to commodity registration performed by a mobile terminal and a transaction management server according to an embodiment.
FIG. 11 is a flowchart of a code symbol display process performed by a mobile terminal according to an embodiment.
FIG. 12 is a sequence diagram of an operation related to a checkout process performed by a transaction management server, a checkout device, and a member management server according to an embodiment.
FIG. 13 is a diagram showing an example of a payment method selection screen according to an embodiment.

### DETAILED DESCRIPTION

The present disclosure describes embodiments of a registration device, a checkout device, and a method addressing existing technical problems with similar devices and methods to provide improvements in the efficiency and convenience of performing a selfcheckout process or the like.

A product registration device includes a display screen, a network interface, a storage memory unit for storing a customer identification, a product reader configured to read commodity identification information from a product to be purchased in a sales transaction, and a processor. The processor is configured to: register commodity identification information read by the product reader in association with a transaction identification on an external server device connected via the network interface, acquire the transaction identification for the sales transaction from the external server device, generate a code symbol encoding the acquired transaction identification and the customer identification from the storage memory unit, and cause the display screen to display the generated code symbol.

Hereinafter, a registration device, a checkout device, and a method for a POS system according to certain example embodiments will be described with reference to the drawings. Hereinafter, a POS system in which a commodity is registered using a portable terminal carried by a customer and then the checkout (payment) for the registered commodity is performed using a checkout device provided in a store will be described. The present disclosure is not limited to the specific embodiments described as an example.

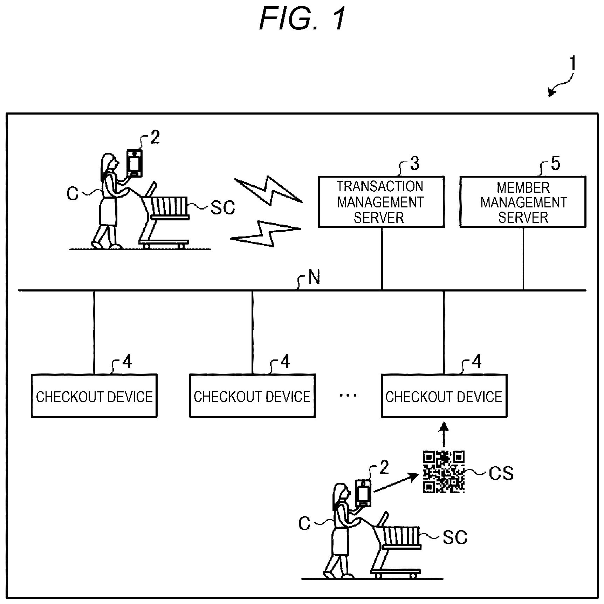

FIG. 1 is a diagram schematically showing an example of a configuration of a POS system according to the embodiment. A POS system 1 is applied to a store that sells commodities such as a supermarket. The POS system 1 includes a mobile terminal 2, a transaction management server 3, a checkout device 4, and a member management server 5. The mobile terminal 2, the transaction management server 3, the checkout device 4, and the member management server 5 are connected to a network N via a communication device such as a router.

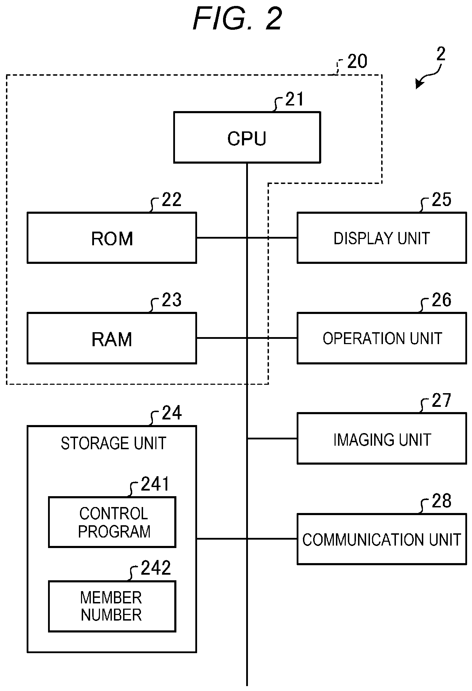

The mobile terminal 2 is an example of a registration device. The mobile terminal 2 is a smartphone carried by a customer C in this example. The mobile terminal 2 functions as the registration device by executing, for example, a pre-installed application program (hereinafter, also referred to as a "shopping application"). For example, the mobile terminal 2 is connected to the network N and communicates with the transaction management server 3 via the network N. The mobile terminal 2 reads the commodity code by which a commodity can be identified from a code symbol such as a bar code attached to the commodity, and registers the commodity code in the transaction on the transaction management server 3. When operated by a customer, the mobile terminal 2 generates a code symbol CS including a transaction number by which a transaction can be identified and a member number by which the customer can be identified, and causes a display unit 25 to display the code symbol CS (see FIG. 2). A shopping cart SC can be provided, for example, in a salesroom of the store, and can be used to transport the commodity being purchased by the customer C.

The transaction management server 3 is an example of an external device and may be referred to as a first external device in some contexts. The transaction management server 3 is, for example, a server device such as a store server, and is provided by the store. The transaction management server 3 stores the commodity code transmitted from the mobile terminal 2 in association with the transaction number. Specifically, the transaction management server 3 stores a unique transaction number in association with the commodity code transmitted from the mobile terminal 2 based on a terminal identifier such as a terminal ID or an IP address or a communication session ID.

The checkout device 4 is provided in the store and is used by a customer who previously registered a commodity for purchase using the mobile terminal 2. The checkout device 4 reads the code symbol CS displayed on the mobile terminal 2 and acquires the information corresponding to the transaction number encoded in the code symbol CS from the transaction management server 3. The checkout device 4 may also acquire information corresponding to the member number encoded in the code symbol CS from the member management server 5. Then, the checkout device 4 performs a checkout process based on this acquired information.

The member management server 5 is an example of a second external device. The member management server 5 is a server device that stores and manages information related to customers registered as a member in advance (registered members). When an inquiry specifying a member number is received from the checkout device 4, the member management server 5 provides information of the member corresponding to the specified member number to the checkout device 4.

FIG. 1 shows the example in which the member management server 5 is provided in the store, but the present disclosure is not limited thereto, and the member management server 5 may be provided on an external network, such as the Internet, accessible via the network N.

In the POS system 1, the customer C goes around in the store while pushing the shopping cart SC, and picks up a commodity desired to be purchased. At this time, the customer C operates the mobile terminal 2 to activate the shopping application, and establishes communication with the transaction management server 3. Further, a commodity code of the commodity desired to be purchased is read by using the mobile terminal 2 by the customer C himself/herself.

The customer C may input his or her unique member number in advance of activating the shopping application (for example, at the time of initial activation/sign-up) or this member number may be input at the time of starting a checkout operation. In general, the member number is stored in the mobile terminal 2 for the transaction. In some cases, the member number may be printed on a card medium such as a member card and distributed to customers, or may be distributed via an association with the shopping application or the like. When a plurality of member numbers are stored in the mobile terminal 2, the customer C may be given the option to select a member number to be used at the time of activating the shopping application or at the time of starting the checkout operation.

When the mobile terminal 2 reads the commodity code from a commodity, the mobile terminal 2 transmits the read commodity code to the transaction management server 3 to register the commodity related to the transaction. The mobile terminal 2 acquires the transaction number of the transaction from the transaction management server 3.

Subsequently, when the customer C performs the checkout of the registered commodity, the customer C performs an operation of instructing an end of the commodity registration or an operation of instructing a start of the checkout on the mobile terminal 2. The mobile terminal 2 receives the operation of the customer C, and displays the code symbol CS including the transaction number and the member number. Next, the customer C causes the checkout device 4 to read the code symbol CS displayed on the mobile terminal 2.

Based on the transaction number and the member number obtained by reading the code symbol CS, the checkout device 4 acquires information corresponding to these numbers from the transaction management server 3 and the member management server 5. Then, the checkout device 4 executes the checkout process for the transaction based on the acquired information. Accordingly, the customer C can perform the checkout of the registered commodity by the checkout device 4.

The payment method used for payment of a purchase price that can be performed by the checkout device 4 is not particularly limited, and payment by cashless methods such as electronic money or a credit card may be used in addition to cash. In addition, in a case where it is confirmed that the customer is a member by collation of the member number, a payment method (for example, payment based on accumulated points) which is permitted only to the member may be used.

Next, aspects of the devices described above will be described. First, hardware configurations of the devices will be described with reference to FIGS. 2 to 8.

FIG. 2 is a diagram showing an example of a hardware configuration of the mobile terminal 2. As shown in FIG. 2, the mobile terminal 2 includes a central processing unit (CPU) 21, a read only memory (ROM) 22, and a random access memory (RAM) 23.

The CPU 21 is an example of a processor, and integrally controls each unit of the mobile terminal 2. The ROM 22 stores various programs. The RAM 23 is a work space in which programs and various types of data are loaded.

The CPU 21, the ROM 22, and the RAM 23 are connected via a bus or the like to constitute a control unit 20 of a computer configuration. In the control unit 20, the CPU 21 operates in accordance with the program stored in a storage unit 24 and loaded in the RAM 23, thereby executing various processes.

The mobile terminal 2 further includes the storage unit 24, the display unit 25, an operation unit 26, an imaging unit 27, a communication unit 28, and the like.

The storage unit 24 is an auxiliary storage device such as a hard disk drive (HDD) or a solid-state drive (SSD). The storage unit 24 stores various control programs 241 executable by the CPU 21 and various types of setting information. For example, the control program 241 includes application software such as the shopping application described above in addition to basic software. The storage unit 24 stores a member number 242 of the customer who operates the mobile terminal 2. The number of member numbers 242 stored in the storage unit 24 is not limited to just one, and may be plural. For example, when the mobile terminal 2 is used by a plurality of people such as family members, the storage unit 24 may store the member number 242 for each person.

The display unit 25 is a display device such as a liquid crystal display (LCD). The display unit 25 displays various types of information under the control of the CPU 21. For example, the display unit 25 displays the code symbol CS, and the like.

The operation unit 26 is an input device such as a keyboard or a pointing device. The operation unit 26 outputs, to the CPU 21, operation contents received from a customer as an operator. The operation unit 26 may be a touch panel provided on a display screen of the display unit 25.

The imaging unit 27 is a digital camera including an imaging element such as a charge coupled device (CCD) or a complementary metal oxide semiconductor (CMOS). The imaging unit 27 outputs, to the CPU 21, imaging data obtained by imaging. In the present embodiment, the imaging unit 27 is used to read a code symbol such as a bar code attached to a commodity.

The communication unit 28 is a wireless communication interface connectable to the network N. The communication unit 28 transmits and receives various types of data to and from the transaction management server 3 connected to the network N, or the like under the control of the CPU 21.

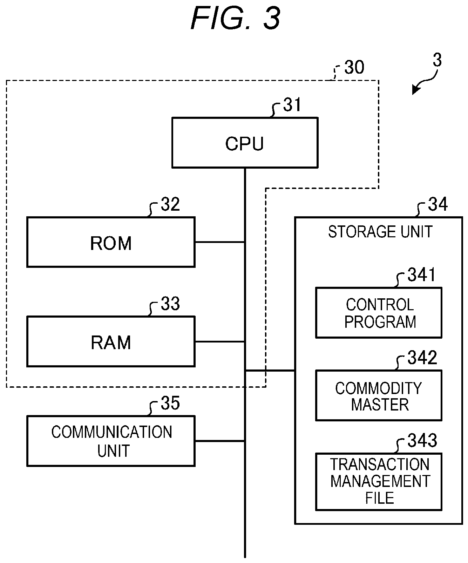

FIG. 3 is a diagram showing an example of a hardware configuration of the transaction management server 3. As shown in FIG. 3, the transaction management server 3 includes a CPU 31, a ROM 32, and a RAM 33.

The CPU 31 is an example of a processor, and integrally controls each unit of the transaction management server 3. The ROM 32 stores various programs. The RAM 33 is a work space in which programs and various types of data are loaded.

The CPU 31, the ROM 32, and the RAM 33 are connected via a bus or the like to constitute a control unit 30 of a computer configuration. In the control unit 30, the CPU 31 operates in accordance with the program stored in a storage unit 34 and loaded in the RAM 33, thereby executing various processes.

The transaction management server 3 further includes the storage unit 34, and a communication unit 35.

The storage unit 34 is an auxiliary storage device such as an HDD or an SSD. The storage unit 34 stores various control programs 341 executable by the CPU 31 and various types of setting information. For example, the control program 341 includes application software such as a database application and a web application in addition to basic software.

The storage unit 34 stores a commodity master 342, a transaction management file 343, and the like.

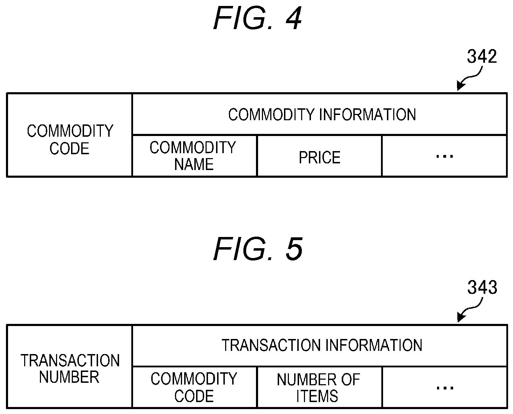

The commodity master 342 is a master file for storing information related to commodities to be sold in the store. For example, the commodity master 342 has a data configuration shown in FIG. 4. FIG. 4 is a diagram showing an example of the data configuration of the commodity master 342. As shown in FIG. 4, the commodity master 342 stores a commodity code in association with commodity information of a commodity corresponding to the commodity code. The commodity code is an example of commodity identification information by which a commodity can be identified. The commodity information includes information such as a commodity name and a price of the commodity corresponding to the commodity code.

The transaction management file 343 is a data file for storing and managing the commodity code transmitted from the mobile terminal 2 in units of transaction. For example, the transaction management file 343 has a data configuration shown in FIG. 5. FIG. 5 is a diagram showing an example of the data configuration of the transaction management file 343. As shown in FIG. 5, the transaction management file 343 stores a transaction number in association with transaction information of a transaction corresponding to the transaction number. The transaction number is an example of transaction identification information by which each transaction can be separately identified. The transaction information includes information such as a commodity code of a commodity registered in the corresponding transaction and the number of registered commodities (number of items) corresponding to the same commodity code.

Returning to FIG. 3, the communication unit 35 is a wired or wireless communication interface connectable to the network N. Under the control of the CPU 31, the communication unit 35 transmits and receives various types of data to and from the mobile terminal 2, the checkout device 4, and the like connected to the network N.

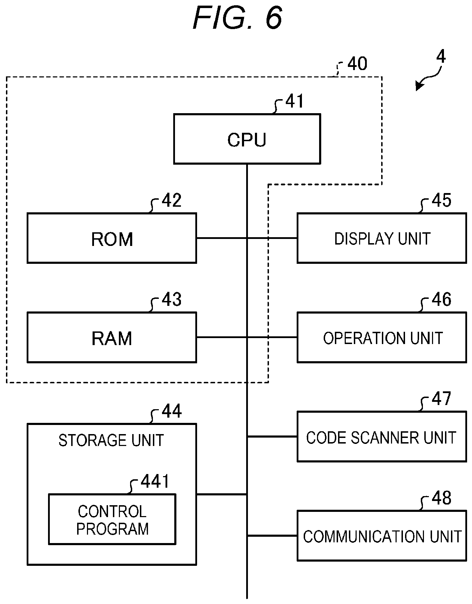

FIG. 6 is a diagram showing an example of a hardware configuration of the checkout device 4. As shown in FIG. 6, the checkout device 4 includes a CPU 41, a ROM 42, and a RAM 43.

The CPU 41 is an example of a processor, and integrally controls each unit of the checkout device 4. The ROM 42 stores various programs. The RAM 43 is a work space in which programs and various types of data are loaded.

The CPU 41, the ROM 42, and the RAM 43 are connected via a bus or the like to constitute a control unit 40 of a computer configuration. In the control unit 40, the CPU 41 operates in accordance with the program stored in a storage unit 44 and loaded in the RAM 43, thereby executing various processes.

The checkout device 4 further includes the storage unit 44, a display unit 45, an operation unit 46, a code scanner unit 47, and a communication unit 48.

The storage unit 44 is an auxiliary storage device such as an HDD or an SSD. The storage unit 44 stores various control programs 441 executable by the CPU 41 and various types of setting information. For example, the control program 441 includes application software such as an application for executing a checkout process in addition to basic software.

The storage unit 44 may store the above-described commodity master 342, and the like. For example, the checkout device 4 may be configured to acquire the commodity master 342 from the transaction management server 3 at a predetermined timing such as a timing when the checkout device 4 is activated, and store the acquired commodity master 342 in the storage unit 44.

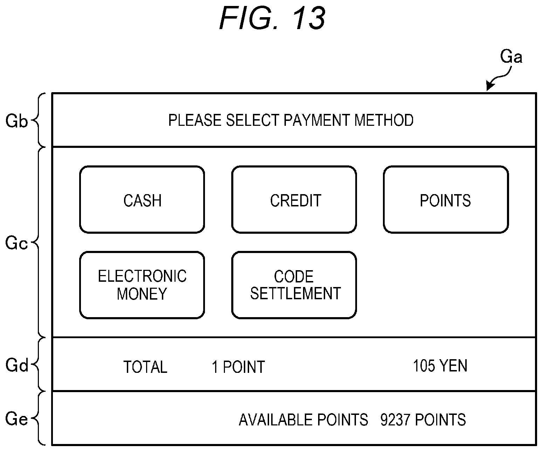

The display unit 45 is a display device such as an LCD. The display unit 45 displays various types of information under the control of the CPU 41. For example, the display unit 45 displays a payment method selection screen (see FIG. 13) described later, and the like.

The operation unit 46 is an input device such as a keyboard or a pointing device. The operation unit 46 outputs, to the CPU 41, operation contents received from a customer as an operator. The operation unit 46 may be a touch panel provided on a display screen of the display unit 45.

The code scanner unit 47 is a reading device capable of reading a code symbol such as a bar code or a two-dimensional code. The code scanner unit 47 includes an imaging element such as a CCD or a CMOS.

The code scanner unit 47 decodes the code symbol to read information held in the code symbol, and outputs the read information to the CPU 41. For example, the code scanner unit 47 reads the transaction number and the member number from the code symbol CS displayed on the display unit 25 of the mobile terminal 2.

The code symbols that can be read by the code scanner unit 47 is not limited to the code symbol CS. For example, the code scanner unit 47 may be used to read a commodity code from a bar code or other symbol attached to a commodity.

The communication unit 48 is a wireless communication interface connectable to the network N. The communication unit 48 transmits and receives various types of data to and from the transaction management server 3 and the member management server 5 connected to the network N, or the like under the control of the CPU 41.

The hardware configuration of the checkout device 4 is not limited to the above example. For example, the checkout device 4 may include a coin machine capable of receiving banknotes and coins and dispensing coins. The checkout device 4 may include a credit settlement device capable of executing credit settlement by using a credit card, a reader/writer device capable of reading information from an IC tag included in a contactless electronic money card, or the like.

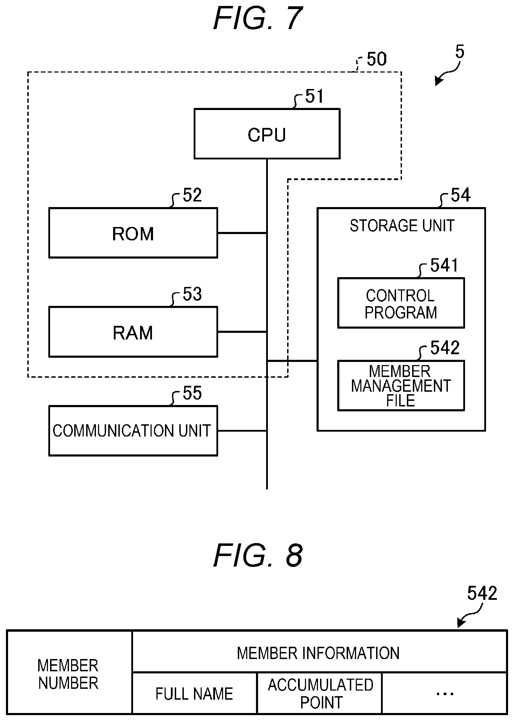

FIG. 7 is a diagram showing an example of a hardware configuration of the member management server 5. As shown in FIG. 7, the member management server 5 includes a CPU 51, a ROM 52, and a RAM 53.

The CPU 51 is an example of a processor, and integrally controls each unit of the member management server 5. The ROM 52 stores various programs. The RAM 53 is a work space in which programs and various types of data are loaded.

The CPU 51, the ROM 52, and the RAM 53 are connected via a bus or the like to constitute a control unit 50 of a computer configuration. In the control unit 50, the CPU 51 operates in accordance with the program stored in a storage unit 54 and loaded in the RAM 53, thereby executing various processes.

The member management server 5 further includes the storage unit 54, a communication unit 55, and the like.

The storage unit 54 is an auxiliary storage device such as an HDD or an SSD. The storage unit 54 stores various control programs 541 executable by the CPU 51 and various types of setting information. For example, the control program 541 includes application software such as a database application and a web application in addition to basic software.

The storage unit 54 stores a member management file 542, and the like. The member management file 542 is a data file for storing and managing information related to members. For example, the member management file 542 has a data configuration shown in FIG. 8. FIG. 8 is a diagram showing an example of the data configuration of the member management file 542. As shown in FIG. 8, the member management file 542 stores a member number in association with member information of a member corresponding to the member number. The member number is an example of customer identification information by which each member (customer) can be identified. The member information includes information such as a full name and an accumulated point of the corresponding member.

Here, the accumulated point is an accumulated value of service points given according to a total amount of money paid for commodities purchased by the customer, or the like. It is assumed that the store according to the present embodiment provides a service of giving points according to the total amount of money of commodities purchased in each transaction. In addition, it is assumed that the store according to the present embodiment provides a service allowing the accumulated point to be used for payments. The member management file 542 may be configured to store, as part of the member information, information such as a date and time of each individual transaction along with a point value given or used in each transaction.

Returning to FIG. 7, the communication unit 55 is a wired or wireless communication interface connectable to the network N. Under the control of the CPU 51, the communication unit 55 transmits and receives various types of data to and from the checkout device 4, and the like connected to the network N.

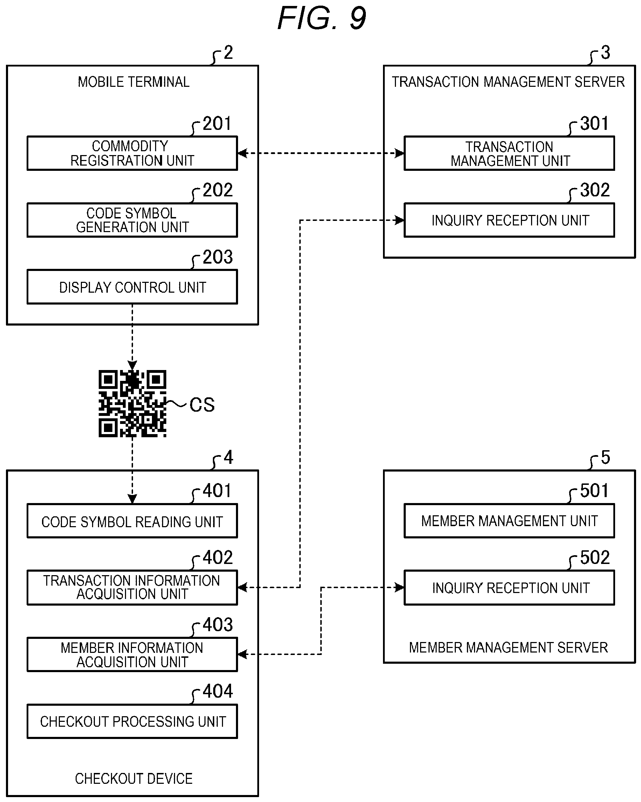

Next, functional aspects of the mobile terminal 2, the transaction management server 3, the checkout device 4, and the member management server 5 will be described. FIG. 9 is a diagram showing an example of the functional aspects of the mobile terminal 2, the transaction management server 3, the checkout device 4, and the member management server 5. In FIG. 9, the functional aspects directly or indirectly related to each device are connected by broken lines.

The mobile terminal 2 provides the functions of a commodity registration unit 201, a code symbol generation unit 202, and a display control unit 203. Specifically, the control unit 20 (CPU 21) of the mobile terminal 2 executes the control program 241 stored in the storage unit 24 to implement the above-described functional aspects. In the present embodiment, the above-described functional aspects are implemented by execution of software on the processor of the mobile terminal 2, but the present disclosure is not limited thereto, a part or all of the functional aspects may be implemented in hardware such as a dedicated circuit, or the like.

The commodity registration unit 201 is an example of a reading unit, a registration unit, and an acquisition unit. The commodity registration unit 201 executes a registration process on the commodity purchased by the customer. Specifically, when a start of the transaction is instructed by the activation of the shopping application or the like, the commodity registration unit 201 reads the commodity code from the code symbol attached to the commodity in cooperation with the imaging unit 27. Next, the commodity registration unit 201 transmits the read commodity code to the transaction management server 3 to register the commodity code in the transaction management server 3. Then, the commodity registration unit 201 registers the commodity code for the transaction in the transaction management server 3 by executing the registration process every time the commodity code is read.

When an instruction of an end of the commodity registration is received via the operation unit 26 or the like, the commodity registration unit 201 notifies the transaction management server 3 of the end of the commodity registration, and acquires the transaction number related to the transaction from the transaction management server 3. Then, the commodity registration unit 201 stores the transaction number in the storage unit 24 or the like.

In the present embodiment, the commodity registration unit 201 acquires the transaction number when the commodity registration ends, but the timing at which the transaction number is acquired is not limited thereto. For example, the commodity registration unit 201 may acquire the transaction number when a first commodity is registered.

The code symbol generation unit 202 is an example of a generation unit. The code symbol generation unit 202 generates the code symbol CS including the transaction number and the member number. For example, when an instruction to perform checkout is given via the operation unit 26, the code symbol generation unit 202 generates, based on the transaction number and the member number stored in the storage unit 24 or the like, the code symbol CS such as a two-dimensional code including these pieces of information.

A timing at which the code symbol generation unit 202 generates the code symbol CS is not limited to a timing when the checkout is instructed. For example, the code symbol generation unit 202 may generate the code symbol CS when the commodity registration ends.

When a plurality of member numbers are stored in the storage unit 24, the code symbol generation unit 202 generates the code symbol CS using the one member number selected by the customer via the operation unit 26. In this case, the code symbol generation unit 202 may cause the display unit 25 to display a screen on which the particular member information to be used can be selected from a plurality of options.

When the member number is not stored in the storage unit 24 or when the operator instructs not to use the member number, the code symbol generation unit 202 may invalidate the member number by setting the member number to null or the like, and generate the code symbol CS in which only the transaction number is validated.

The display control unit 203 is an example of a display control unit. The display control unit 203 causes the display unit 25 to display the code symbol CS generated by the code symbol generation unit 202. For example, the display control unit 203 causes the display unit 25 to display the code symbol CS generated by the code symbol generation unit 202 when the instruction to perform checkout is given via the operation unit 26.

The customer operating the mobile terminal 2 causes the code scanner unit 47 of the checkout device 4 to read the code symbol CS displayed on the display unit 25, whereby the checkout of the commodity can be performed in the checkout device 4.

As shown in FIG. 9, the transaction management server 3 provides the functions of a transaction management unit 301 and an inquiry reception unit 302. Specifically, the control unit 30 (CPU 31) of the transaction management server 3 executes the control program 341 stored in the storage unit 34 to implement the above-described functional aspects. In the present embodiment, the above-described functional aspects are implemented as software executed on the processor of the transaction management server 3, but the present disclosure is not limited thereto, a part or all of the functional aspects may be implemented as a hardware configuration such as a dedicated circuit, or the like.

The transaction management unit 301 stores and manages the commodity code transmitted from the same mobile terminal 2 as a commodity code related to the transaction in the transaction management file 343. Specifically, when the commodity code is received from the mobile terminal 2, the transaction management unit 301 stores the commodity code in the transaction management file 343 as the transaction information related to a particular transaction. When the transaction management unit 301 receives a plurality of the same commodity codes from the same mobile terminal 2, the transaction management unit 301 stores the received number as the number of items of the commodity codes. It is assumed that a default number is "1".

The transaction management unit 301 generates a unique transaction number for each transaction and stores the transaction number in association with transaction information. For example, when the transaction management unit 301 is notified of the instruction indicating end of registration from the mobile terminal 2, the transaction management unit 301 generates a transaction number, and stores the generated transaction number in association with the transaction information related to the transaction of the mobile terminal 2. The transaction management unit 301 transmits the generated transaction number to the mobile terminal 2 that is notified of the end of the registration.

A timing at which the transaction management unit 301 generates the transaction number is not limited to the above example. For example, the transaction management unit 301 may generate the transaction number at a timing when the first commodity code is received from each of the mobile terminals 2 and store the generated transaction number in association with the transaction information (commodity code).

The transaction management unit 301 may read, from the commodity master 342, commodity information corresponding to the commodity code transmitted from the mobile terminal 2 and transmit the commodity information to the mobile terminal 2 as a transmission source. In this case, the commodity registration unit 201 of the mobile terminal 2 receives the commodity information from the transaction management server 3 as a response to the transmitted commodity code, and causes the display unit 25 to display a registration completion screen based on the commodity information. For example, the commodity registration unit 201 displays the registration completion screen including a commodity name, a price, and the like of the registered commodity. Accordingly, since the customer operating the mobile terminal 2 can confirm the commodity information and a registration result of the commodity every time the commodity code of the commodity to be registered is read, convenience can be improved.

The inquiry reception unit 302 receives, from the checkout device 4, an inquiry about transaction information specifying a transaction number. Specifically, when the inquiry about transaction information is received from the checkout device 4, the inquiry reception unit 302 reads, from the transaction management file 343, the transaction information corresponding to the transaction number specified by the inquiry. Then, the inquiry reception unit 302 transmits the read transaction information to the checkout device 4 as an inquiry source. The inquiry reception unit 302 may read commodity information corresponding to each commodity code included in the transaction information from the commodity master 342, and may transmit the read commodity information, together with the transaction information or included in the transaction information, to the checkout device 4.

As shown in FIG. 9, the checkout device 4 provides the functions of a code symbol reading unit 401, a transaction information acquisition unit 402, a member information acquisition unit 403, and a checkout processing unit 404. Specifically, the control unit 40 (CPU 41) of the checkout device 4 executes the control program 441 stored in the storage unit 44 to implement the above-described functional aspects. In the present embodiment, the above-described functional aspects are implemented by execution of software on the processor of the checkout device 4, but the present disclosure is not limited thereto, a part or all of the functional aspects may be implements as hardware such as a dedicated circuit, or the like.

The code symbol reading unit 401 reads a code symbol in cooperation with the code scanner unit 47. For example, the code symbol reading unit 401 reads the code symbol CS displayed on the display unit 25 of the mobile terminal 2.

The transaction information acquisition unit 402 is an example of a first acquisition unit. The transaction information acquisition unit 402 acquires transaction information corresponding to a transaction number from the transaction management server 3 by making an inquiry specifying the transaction number to the transaction management server 3. Specifically, the transaction information acquisition unit 402 transmits the inquiry to the transaction management server 3 based on the transaction number obtained by reading the code symbol CS. Then, the transaction information acquisition unit 402 acquires the transaction information transmitted from the transaction management server 3 as a response to the inquiry.

The member information acquisition unit 403 is an example of a second acquisition unit. The member information acquisition unit 403 acquires member information corresponding to a member number from the member management server 5 by making an inquiry about member information specifying the member number to the member management server 5. Specifically, the member information acquisition unit 403 transmits the inquiry specifying the member number to the member management server 5 based on the member number obtained by reading the code symbol CS. Then, the member information acquisition unit 403 acquires the member information transmitted from the member management server 5 as a response to the inquiry.

When the member number is not obtained by reading the code symbol CS, the member information acquisition unit 403 may cause the display unit 45 to display a screen notifying that the member number is not input. For example, the member information acquisition unit 403 may cause the display unit 45 to display an operator for confirming whether to input a member number, and may receive the input of the member number via the operation unit 46 or the code scanner unit 47 when the input is instructed. In this case, the member information acquisition unit 403 makes an inquiry to the member management server 5 based on the input member number. In addition, when the input of the member number is not instructed, the member information acquisition unit 403 may skip the acquisition of the member information and handle the customer as a nonmember.

The checkout processing unit 404 is an example of a checkout unit. The checkout processing unit 404 executes a checkout process on the registered commodity based on the information acquired by the transaction information acquisition unit 402 and the member information acquisition unit 403. Specifically, the checkout processing unit 404 calculates a total amount of money of commodities and a total number of items based on a detail of the transaction included in the transaction information acquired by the transaction information acquisition unit 402. Here, the total amount of money can be calculated by adding an amount of money obtained by multiplying a price of the commodity corresponding to the commodity code included in the transaction information by the number of items of the commodity for all the commodities included in the transaction information.

The price of the commodity corresponding to the commodity code may be identified by referring to the commodity master 342 held by the transaction management server 3, and when the commodity master 342 is locally held, the price may be identified by referring to the commodity master 342. When the commodity information is transmitted together with the transaction information from the transaction management server 3, the price of the commodity corresponding to the commodity code may be identified based on the commodity information.

In addition, the checkout processing unit 404 performs settings related to the checkout based on the member information acquired by the member information acquisition unit 403. For example, the checkout processing unit 404 changes the payment method according to the number of accumulated points, or displays the number of accumulated points as available points. As an example, when the number of accumulated points is equal to or greater than a predetermined threshold, the checkout processing unit 404 causes the display unit 45 to display an operator capable of instructing a payment by points. Here, the threshold of the accumulated points can be freely set. For example, the threshold of the accumulated points may be 1 point or more, or may be 300 points or more.

When the member information acquisition unit 403 cannot acquire the member information, the checkout processing unit 404 handles the customer as a nonmember, and invalidates or hides the operator capable of instructing the payment by points.

Next, the checkout processing unit 404 executes the checkout process for settling the calculated total amount of money by the payment method specified by the customer. The checkout processing unit 404 causes the display unit 45 to display a screen for selecting a payment method for the checkout process (hereinafter, referred to as a payment method selection screen). The above-described operator capable of instructing the payment by points is displayed on, for example, the payment method selection screen. The payment method selection screen will be described later.

When the checkout process is completed, the checkout processing unit 404 transmits, to the transaction management server 3, a completion notification specifying the transaction number of the transaction for which the checkout process has been completed. When the transaction management unit 301 of the transaction management server 3 receives the completion notification from the checkout device 4, the transaction management unit 301 sets a flag to an entry of the transaction management file 343 related to the transaction number specified as completed or moves the entry to another data file, thereby excluding the entry from active management targets.

When the payment method is other than the point payment, the checkout processing unit 404 calculates the number of points corresponding to the total amount of money, and transmits a point operation instruction instructing addition of the number of points and the member number to the member management server 5. Accordingly, the member management server 5 performs a process of adding the instructed number of points to the accumulated points of the member number instructed by the point operation instruction. When the payment method is the point payment, the checkout processing unit 404 transmits a point operation instruction instructing subtraction of the number of points used for the payment and the member number to the member management server 5. Accordingly, the member management server 5 performs a process of subtracting the instructed number of points from the accumulated points of the member number instructed by the point operation instruction.

In this way, in the checkout device 4, the transaction number and the member number are read from the code symbol CS displayed on the mobile terminal 2 to acquire the corresponding transaction information and member information and execute the checkout process. Therefore, the customer carrying the mobile terminal 2 can deliver the transaction information and the member information to the checkout device 4 by presenting the code symbol CS to the checkout device 4, and can perform the checkout process on the registered commodity in the checkout device 4. Accordingly, the POS system 1 can efficiently perform the checkout process of the customer registered as a member.

As shown in FIG. 9, the member management server 5 provides the functions of a member management unit 501 and an inquiry reception unit 502. Specifically, the control unit 50 (CPU 51) of the member management server 5 executes the control program 541 stored in the storage unit 54 to implement the above-described functional aspects. In the present embodiment, the above-described functional aspects are implemented by execution of software on the processor of the member management server 5, but the present disclosure is not limited thereto, a part or all of the functional aspects may implemented as hardware such as a dedicated circuit, or the like.

The member management unit 501 stores and manages member information related to each member in the member management file 542. Specifically, the member management unit 501 stores member information of a member corresponding to a member number in the member management file 542 in association with the member number for identifying each member.

According to the point operation instruction transmitted from the checkout device 4, the member management unit 501 gives (adds) the instructed number of points to the accumulated points of the member number instructed by the point operation instruction or subtracts the instructed number of points from the accumulated points of the member number.

The inquiry reception unit 502 receives, from the checkout device 4, an inquiry about member information specifying a member number. Specifically, when the inquiry about member information is received from the checkout device 4, the inquiry reception unit 502 reads, from the member management file 542, the member information corresponding to the member number specified by the inquiry. Then, the inquiry reception unit 502 transmits the read member information to the checkout device 4 as an inquiry source. The inquiry reception unit 502 may transmit the accumulated points included in the member information corresponding to the member number to the checkout device 4.

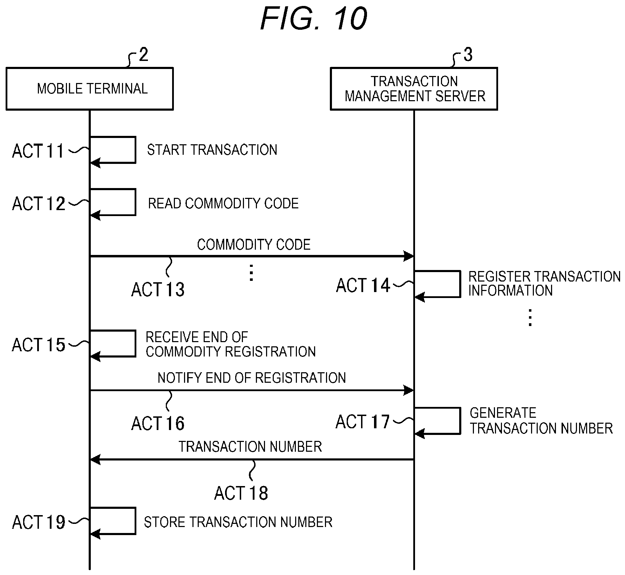

Hereinafter, an operation example of the POS system 1 having the above-described configuration will be described with reference to FIGS. 10 to 13.

First, an operation example related to the commodity registration performed between the mobile terminal 2 and the transaction management server 3 will be described with reference to FIG. 10. Here, FIG. 10 is a sequence diagram showing an example of an operation related to the commodity registration performed between the mobile terminal 2 and the transaction management server 3.

When an instruction to start a transaction is received from the activation of the shopping application or the like (ACT 11), the commodity registration unit 201 of the mobile terminal 2 controls the imaging unit 27 such that the commodity code can be read. When the commodity code is read (ACT 12), the commodity registration unit 201 transmits the commodity code to the transaction management server 3 (ACT 13). When the commodity code is received from the mobile terminal 2, the transaction management unit 301 of the transaction management server 3 registers (stores) the commodity code in the transaction management file 343 as the transaction information related to a transaction (ACT 14). Every time the commodity code is read, the mobile terminal 2 and the transaction management server 3 execute the processes in ACT S12 to ACT S14.

Subsequently, when the instruction indicating end of the commodity registration is received (ACT 15), the commodity registration unit 201 of the mobile terminal 2 notifies the transaction management server 3 of the end of the registration (ACT 16). The transaction management unit 301 of the transaction management server 3 generates the transaction number in response to the notification of the end of the registration (ACT 17), and stores the transaction number in association with the transaction information related to the mobile terminal 2 as a notification source. The transaction management unit 301 transmits the generated transaction number to the mobile terminal 2 as a notification source (ACT 18).

Then, when the transaction number transmitted from the transaction management server 3 is acquired, the commodity registration unit 201 of the mobile terminal 2 stores the transaction number in the storage unit 24 or the like (ACT 19). Accordingly, the mobile terminal 2 is in a state of capable of proceeding to the checkout of the registered commodity.

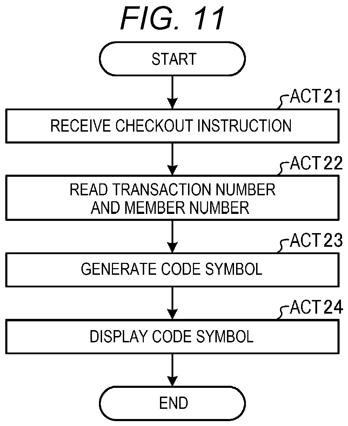

Next, an operation example related to the display of the code symbol performed by the mobile terminal 2 will be described with reference to FIG. 11. Here, FIG. 11 is a flowchart showing an example of a code symbol display process performed by the mobile terminal 2. As a premise of this process, it is assumed that the mobile terminal 2 is in a state after the commodity registration is completed, that is, a state in which the transaction number is held in the storage unit 24 or the like.

First, when an instruction to start the checkout is received (ACT 21), the code symbol generation unit 202 reads the transaction number and the member number from the storage unit 24 or the like (ACT 22). Next, the code symbol generation unit 202 generates the code symbol CS such as a two-dimensional code including the read transaction number and member number (ACT 23).

When there are a plurality of member numbers, the code symbol generation unit 202 may cause the display unit 25 to display a screen on which one member number to be used can be selected to prompt the operator to make a selection. When there is no member number or when the operator instructs not to use the member number, the code symbol generation unit 202 may generate the code symbol CS in which the member number is invalidated by setting the member number to null or the like.

Subsequently, the display control unit 203 causes the display unit 25 to display the code symbol CS generated in ACT 23 (ACT 24), and ends the process.

Accordingly, the operator of the mobile terminal 2 uses the code symbol CS displayed on the display unit 25 of the mobile terminal 2, whereby the checkout can be performed by any one of the checkout devices 4.

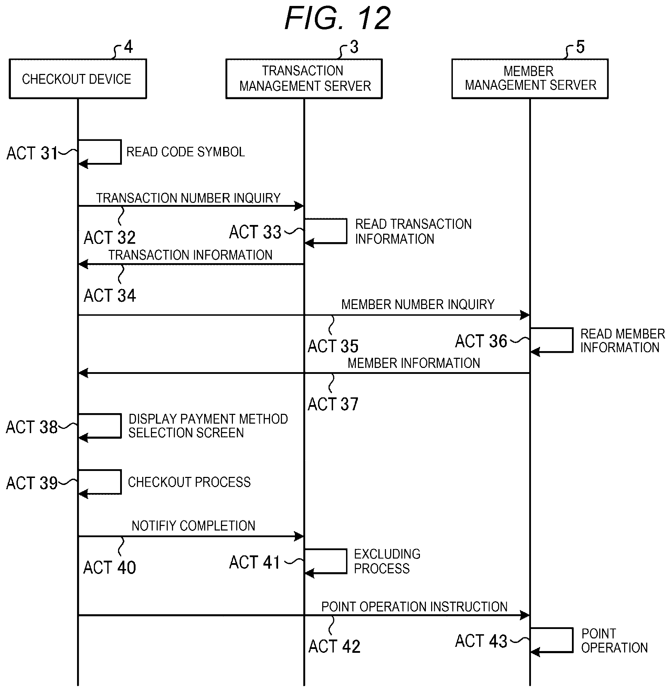

Next, with reference to FIG. 12, an operation example related to a checkout process performed among the transaction management server 3, the checkout device 4, and the member management server 5 will be described. Here, FIG. 12 is a sequence diagram showing an example of an operation related to the checkout process performed among the transaction management server 3, the checkout device 4, and the member management server 5.

First, the code symbol reading unit 401 of the checkout device 4 reads the transaction number and the member number from the code symbol CS displayed on the mobile terminal 2 (ACT 31). Next, based on the transaction number read in ACT 31, the transaction information acquisition unit 402 of the checkout device 4 makes an inquiry specifying the transaction number to the transaction management server 3 (ACT 32).

In response to the inquiry from the checkout device 4, the inquiry reception unit 302 of the transaction management server 3 reads the transaction information corresponding to the transaction number specified by the inquiry from the transaction management file 343 (ACT 33). Then, the inquiry reception unit 302 transmits the read transaction information to the checkout device 4 as an inquiry source (ACT 34). Then, the transaction information acquisition unit 402 of the checkout device 4 acquires the transaction information transmitted from the transaction management server 3.

The inquiry reception unit 302 may transmit the commodity information of the commodity corresponding to the commodity code included in the transaction information to the checkout device 4 together with the transaction information.

In addition, based on the member number read in ACT 31, the member information acquisition unit 403 of the checkout device 4 makes an inquiry specifying the member number to the member management server 5 (ACT 35).

In response to the inquiry from the checkout device 4, the inquiry reception unit 502 of the member management server 5 reads the member information corresponding to the member number specified by the inquiry from the member management file 542 (ACT 36). Then, the inquiry reception unit 502 transmits the read member information to the checkout device 4 as an inquiry source (ACT 37). Then, the member information acquisition unit 403 of the checkout device 4 acquires the member information transmitted from the member management server 5.

When the member number is not read in ACT 31, the member information acquisition unit 403 may skip the ACT 35, and handle the customer as a nonmember without member information.

Subsequently, the checkout processing unit 404 of the checkout device 4 causes the display unit 45 to display the payment method selection screen for selecting a payment method based on the information acquired by the transaction information acquisition unit 402 and the member information acquisition unit 403 (ACT 38).

Here, FIG. 13 is a diagram showing an example of the payment method selection screen. As shown in FIG. 13, a payment method selection screen Ga includes four regions, i.e., regions Gb to Ge. Here, a message or the like for prompting selection of a payment method is displayed in the region Gb.

In the region Gc, an operator enabling selection of one payment method from a plurality of payment methods is displayed. FIG. 13 shows an example in which operators (for example, buttons) enabling selection of "cash", "credit", "points", "electronic money", and "code settlement" are displayed as the payment methods.

Here, the "cash" is an operator for giving an instruction to pay for the commodity by cash. The "credit" is an operator for giving an instruction to pay for the commodity with a credit card. The "electronic money" is an operator for giving an instruction to pay for the commodity by electronic money. The "code settlement" is an operator for giving an instruction to pay for the commodity by code settlement using a bar code or the like. When the code settlement is selected, for example, the checkout device 4 performs cashless settlement by reading a code symbol for the code settlement displayed on the mobile terminal 2.

In addition, the "points" is an operator for giving an instruction to pay for the commodity using the accumulated points included in the member information. For example, when a value of the accumulated points included in the member information acquired by the member information acquisition unit 403 is equal to or greater than a predetermined threshold, the checkout processing unit 404 displays the operator "points" in the region Gc to be in a selectable state. In addition, for example, when the value of the accumulated points is less than the threshold or when the customer is a nonmember, the checkout processing unit 404 invalidates or hides the operator "points", whereby the operator "points" is in an unselectable state.

A conversion rate for converting the points into an amount of money is not particularly limited, and can be freely set. For example, the conversion rate may be changed according to a grade of the member. In this case, the grade of the member is preferably stored and managed for each member by being included in the member information.

In the region Gd, the total number of items of registered commodities and the total amount of money are displayed as the detail of the transaction information. In the region Ge, the value of the accumulated points included in the member information is displayed as available points. When the value of the accumulated points is less than the threshold, the checkout processing unit 404 may change the wording "available points" to "accumulated points" or the like and display the same. In a case of the nonmember, the checkout processing unit 404 may hide the region Gd.

The customer operating the checkout device 4 can select a desired payment method from the payment methods displayed in the region Gc of the payment method selection screen. That is, the customer who is a member can select the payment method based on the accumulated points included in his/her member information. When the payment method is selected by the operation of the operator, the checkout processing unit 404 receives the selected payment method.

Referring back to FIG. 12, the checkout processing unit 404 of the checkout device 4 executes the checkout process for settling the price (total amount of money) of the commodities using the payment method selected on the payment method selection screen (ACT 39).

When the checkout process is completed, the checkout processing unit 404 transmits a completion notification instructing the transaction number related to the transaction to the transaction management server 3 (ACT 40). When the completion notification is received from the checkout device 4, the transaction management unit 301 of the transaction management server 3 executes an excluding process of excluding the entry corresponding to the transaction number from active management targets (ACT 41).

The checkout processing unit 404 calculates a point value to be added or subtracted according to the payment method, and transmits a point operation instruction indicating the point value and the member number to the member management server 5 (ACT 42). When the point operation instruction is received from the checkout device 4, the member management unit 501 executes a point operation of adding or subtracting points to or from the accumulated points of the member number (ACT 43). In the case of a nonmember, the checkout processing unit 404 skips ACT 42 to eliminate the need for the point operation.

As described above, the mobile terminal 2 according to the present embodiment reads a commodity code by which the commodity can be identified, registers the read commodity code in a transaction on the transaction management server 3, and acquires (from the transaction management server 3) a transaction number by which the transaction related to the registered commodity code can be identified. In addition, the mobile terminal 2 generates the code symbol CS including the transaction number and a customer number by which the customer related to the transaction can be identified, and causes the display unit 25 to display the generated code symbol CS.

Accordingly, the customer can cause the checkout device 4 to acquire transaction information and customer information by causing the checkout device 4 to read the code symbol CS displayed on the mobile terminal 2. Therefore, the mobile terminal 2 can efficiently perform a checkout process of the customer. Since the mobile terminal 2 can generate the code symbol CS including the customer information stored locally, a degree of freedom of the customer related to the input of the customer information can be improved.

For example, the mobile terminal 2 can generate, according to a user operation, the code symbol CS in which the customer number is invalidated. When a plurality of customer numbers are stored, the mobile terminal 2 can generate the code symbol CS using one customer number selected by the user operation. Accordingly, the customer as a nonmember can perform the checkout, or the checkout based on the member information of each person can be performed when a plurality of people use the mobile terminal 2.

The checkout device 4 according to the present embodiment reads the transaction number and the member number from the code symbol CS including the transaction number and the member number, and acquires, from the transaction management server 3, transaction information indicating a detail of a commodity registered in a transaction corresponding to the transaction number, and acquires, from the member management server 5, member information of a member corresponding to the member number. Then, based on the acquired transaction information and customer information, the checkout device 4 executes a checkout process on a commodity included in a detail of the transaction information.

Accordingly, the checkout device 4 can perform the checkout process based on the transaction information and the customer information by the customer causing the checkout device 4 to read the code symbol CS displayed on the mobile terminal 2. Therefore, the checkout device 4 can efficiently perform the checkout process of the customer.

The checkout device 4 displays a payment method selection screen for selecting a payment method on the display unit 45 based on a value of accumulated points available for payment of a price of a commodity included in the customer information, and executes the checkout process using the payment method selected from the screen. Accordingly, the customer can pay for the commodity by the payment method according to the accumulated points given to himself/herself. Therefore, the checkout device 4 can efficiently perform the checkout process of the customer as a member.

Modifications of the above-described embodiments will now be described as additional embodiments. In the following, differences from the above-described embodiment will be mainly described, and detailed descriptions of substantially similar aspects may be omitted. Furthermore, the modifications described below may be implemented individually or in combination with one another as appropriate.

### (Modification 1)

In an embodiment, the transaction management server 3 and the member management server 5 are different devices, but the transaction management server 3 and the member management server 5 may be an integrated server device. Additionally, the transaction management server 3 and the member management server 5 are not limited to a separate server devices, and may each be a cloud server or the like combining a plurality of server devices.

### (Modification 2)

In an embodiment, the mobile terminal 2 generates the code symbol CS including a transaction number and a member number, but for example, instead of the transaction number, the code symbol CS may itself be generated to include the commodity codes registered by the mobile terminal 2, that is, the transaction information itself. In this case, the checkout device 4 can perform the checkout process using the transaction information obtained by reading the code symbol CS without separately obtaining transaction from a transaction management server 3 or the like. Therefore, the checkout device 4 can more efficiently perform the checkout process of the customer.

### (Modification 3)

In an embodiment, the checkout device 4 itself calculates the total number of items of commodities and the total amount of money due in the transaction for the commodities being checked out, but the present disclosure is not limited thereto, the transaction management server 3 may perform such calculations and provide the results to the checkout device 4.

In this case, at a timing when an inquiry is received from the checkout device 4, the inquiry reception unit 302 of the transaction management server 3 reads the transaction information corresponding to the specified transaction number from the transaction management file 343, and calculates the total number of items of commodities and the total amount of money based on the details in the transaction information. Then, the inquiry reception unit 302 transmits the calculated total number of items and total amount of money to the checkout device 4. Alternatively, the inquiry reception unit 302 transmits, together with the transaction information, the calculated total number of items and total amount of money to the checkout device 4. In the present modification, the same effect as those of the above-described embodiment can also be obtained.

In an embodiment, the control programs executed by the devices may be configured to be provided by being recorded on a computer-readable recording medium such as a CD-ROM. The control programs executed by the devices may be stored in a computer connected to a network such as the Internet and provided by being downloaded via the network, or may be provided via a network such as the Internet.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. A product registration device (2), comprising:
a display screen (25);
a network interface (28);
a storage memory unit (24) for storing a customer identification;
a product reader (27) configured to read commodity identification information from a product to be purchased in a sales transaction; and
a processor (20) configured to:
register commodity identification information read by the product reader in association with a transaction identification on an external server device connected via the network interface;
acquire the transaction identification for the sales transaction from the external server device;
generate a code symbol encoding the acquired transaction identification and the customer identification from the storage memory unit; and
cause the display screen to display the generated code symbol.

2. The product registration device according to claim 1, wherein the processor is further configured to display a customer identification entry screen on the display screen to permit a customer to store the customer identification in the storage memory unit.

3. The product registration device according to claim 1 or 2, wherein the customer identification stored in the storage memory unit can be set to a null value according to customer selection.

4. The product registration device according to any one of claims 1 to 3, wherein the processor is further configured to display a customer identification selection screen on the display screen to permit a customer to select the customer identification for the sales transaction from a plurality of customer identifications stored in the storage memory unit.

5. The product registration device according to claim 1, wherein the code symbol is a two-dimensional code.

6. The product registration device according to claim 1, wherein the code symbol is a bar code.

7. The product registration device according to any one of claims 1 to 6, wherein the product reader is a camera unit.

8. The product registration device according to any one of claims 1 to 7, wherein the customer identification is pre-stored in the storage memory unit before commodity identification information is registered on the external server device.

9. A checkout device (4) connected to a product registration device according to any one of claims 1 to 8 via a communication device, comprising:
a code reader unit (47) for reading a code symbol; and
a processor configured to:
obtain a transaction identification and a customer identification by decoding the code symbol read by the code reader unit;
acquire transaction information associated with the obtained transaction identification from a transaction server, the transaction information including commodity information for one or more products registered for purchase in a sales transaction;
acquire customer information associated with the obtained customer identification from a member server; and
a transaction checkout process based on the acquired transaction information and the acquired customer information.

10. The checkout device according to claim 9, wherein the processor is further configured to cause a display unit to display a selection screen for selecting a payment method for the sales transaction.

11. The checkout device according to claim 10, wherein the selection screen includes an option for payment with accumulated member points when a value of the accumulated member points as indicated in the customer information exceeds a threshold value.

12. The checkout device according to any one of claims 9 to 11, wherein the code reader unit is a product scanner device.

13. The checkout device according to any one of claims 9 to 12, wherein the coder reader unit is a bar code reader.

14. A non-transitory, computer-readable medium storing program instructions which when executed by a processor of a product registration device cause the product registration device to execute a method comprising:
registering commodity identification information read by a product reader in association with a transaction identification on an external server device connected via a network interface;
acquiring the transaction identification for a sales transaction from the external server device;
generating a code symbol encoding the acquired transaction identification and customer identification from a storage memory unit; and
causing a display screen to display the generated code symbol.

15. The non-transitory, computer-readable medium according to claim 14, the method further comprising:
displaying a customer identification entry screen on the display screen to permit a customer to store the customer identification in the storage memory unit.
